# EUROPEAN PATENT SPECIFICATION

(11) **EP 3 974 170 B1**
(45) Date of publication and mention of the grant of the patent: **16.09.2026**
(21) Application number: 20810441.4
(22) Date of filing: 12.05.2020
(51) Int. Cl.: B32B 1/08, F16L 11/14, F16L 13/02

(54) **STRUCTURE OF COMPOSITE FLEXIBLE PIPELINE FOR CRUDE OIL AND NATURAL GAS TRANSPORTATION AND LAYING METHOD THEREFOR**
STRUKTUR EINER FLEXIBLEN ROHRLEITUNG AUS VERBUNDMATERIAL FÜR DEN TRANSPORT VON ERDÖL UND ERDGAS UND VERFAHREN ZUR VERLEGUNG DAFÜR
STRUCTURE DE CANALISATION SOUPLE COMPOSITE POUR TRANSPORT DE PÉTROLE BRUT ET DE GAZ NATUREL ET PROCÉDÉ DE POSE POUR CELLE-CI

(30) Priority: 20.05.2019 CN 201910419836
(43) Date of publication of application: 30.03.2022
(73) Proprietor: Kuraray Co., Ltd., Kurashiki-shi, Okayama 710-0801 (JP)
(72) Inventor: SAKANO, Takeshi, Kurashiki-shi, Okayama 7138550 (JP); GAO, Weimin, Shanghai 200030 (CN); SONG, Yuan, Shanghai 200030 (CN)
(74) Representative: Müller-Boré & Partner Patentanwälte PartG mbB
(86) International application number: PCT/CN2020/089838
(87) International publication number: WO 2020/233454

(56) References cited:
- WO-A1-03/028995
- WO-A1-2009/051156
- CN-A- 1 109 154
- CN-A- 102 821 931
- CN-A- 109 747 189
- CN-U- 206 054 953
- CN-U- 207 122 673
- JP-A- 2004 025 752
- US-A1- 2004 081 787

## Description

### FIELD OF THE INVENTION

The present invention relates to a method for transporting crude oil or natural gas through a pipeline comprising a multilayer structure having a barrier resin layer (A), and the pipeline used in the method.

### BACKGROUND OF THE INVENTION

So far, crude oil and natural gas have been exploited and transported mostly using steel pipelines. However, since crude oil and natural gas fields contain a large number of acidic components represented by hydrogen sulfide gas, steel pipelines are extremely susceptible to corrosion, causing the leakage of crude oil and natural gas. In recent years, with a large-scale exploitation of oil and gas fields, the phenomenon of pipeline corrosion in acidic gas fields is particularly prominent, and the requirements for pipeline corrosion resistance are increasing. In addition, when using nitrogen dioxide flooding, ternary flooding, and alkaline flooding for crude oil extraction, it is also necessary to consider the barrier properties of pipelines against carbon dioxide gas. Moreover, steel pipelines are prone to sparks during welding, and are extremely dangerous when operating in environments containing crude oil or natural gas.

To solve the above-mentioned problems, pipelines made of a mixture of polyolefins and polymers insoluble in polyolefins have been used so far (Patent Literature 1). In addition, in order to prevent corrosion of steel pipelines used for transporting crude oil or natural gas and other natural resources, as an anti-corrosion material for pipelines, an adhesive resin with a specific ratio is also disclosed, that is, a composite material of a five-layer structure containing propylene · α-olefin copolymer elastomer, polypropylene, and polypropylene modified with unsaturated carboxylic acid (composition: polypropylene resin/adhesive resin/EVOH resin/adhesive resin/polypropylene resin) (Patent Literature 2). In addition, as a flexible pipeline winding reinforcement layer (glass fiber etc.) for transporting liquids, gases and other media, it is disclosed to use an ethylene-vinyl alcohol copolymer (hereinafter referred to as EVOH) as a barrier layer (Patent Literature 3).

Patent Literature 4 discloses a fuel pipe composed of a multilayer structure having a layer made of a modified ethylene-vinyl alcohol copolymer and a layer made of a resin other than the modified ethylene-vinyl alcohol copolymer.

Patent Literature 5 discloses a multi-layer article including a first polymer layer bonded to a barrier layer, which is bonded to a second polymer layer.

Patent Literature 6 discloses a fuel system comprising a fuel vessel, molded parts for a fuel and a tube for a fuel which are excellent in a permeation-preventing performance against an automobile fuel (gasoline barrier property), a heat resistance and an impact resistance.

### PRIOR ART LITERATURE

### PATENT LITERATURE

Patent Literature 1: Japanese Patent Application Laid-open Publication No. SHO-63-252713
Patent Literature 2: Japanese Patent Application Laid-open Publication No. 2000-143899
Patent Literature 3: Japanese National-phase PCT Laid-Open Patent Publication No. 2013-527814.
Patent Literature 4: WO 2009/051156 A1
Patent Literature 5: WO 03/028995 A1
Patent Literature 6: US 2004/0081787 A1

### SUMMARY OF THE INVENTION

### PROBLEMS TO BE SOLVED BY THE INVENTION

In the pipeline described in Patent Literature 1, an insoluble polymer is added to polyolefins to impart gas barrier properties. However, the greater the amount of the insoluble polymers added to polyolefins, the worse the mechanical strength of the pipeline, making it difficult to balance gas barrier properties and mechanical strength. On the contrary, too high polyolefin content will lead to insufficient gas barrier properties, especially hydrogen sulfide gas barrier properties, and hydrogen sulfide gas may leak to the external environment. In addition, the barrier material described in Patent Literature 2 is regarded as an inner lining material of a steel pipeline, and the steel pipeline requires welding when being used. However, when the steel pipeline is welded, an open flame is likely to be generated and there is a danger of explosion. In addition, the barrier material is not used as a separate pipeline. Even when it is used alone, its mechanical strength, acid resistance, and hydrogen sulfide gas barrier properties are insufficient within the thickness range studied. In addition, when the winding reinforcement layer (glass fiber, etc.) described in Patent Literature 3 is used on a flexible pipeline, the cross sections of a barrier resin such as EVOH are easily exposed at the end of the winding layer, and gases such as hydrogen sulfide and carbon dioxide are likely to leak from such end surface, resulting in insufficient gas barrier properties. In addition, the reinforcement layer needs to be welded with an open flame, as mentioned above, there is a risk of explosion during construction.

The present invention was made in order to solve the above-mentioned problems, and by using a pipeline that is resistant to corrosion and has excellent barrier properties against acidic gases, the transportation safety of crude oil and natural gas is improved, and hydrogen sulfide, carbon dioxide and other gases will not leak to the external environment. In addition, the pipeline is made of thermoplastic resin and can be heated and welded by a heater during construction, which can significantly improve the safety of construction work.

### SOLUTION TO THE PROBLEMS

The inventors of the present invention found that the above-mentioned problems can be solved by the present invention as defined in the appended set of claims.

### EFFECTS OF THE INVENTION

The method of transporting crude oil or natural gas of the present invention uses the multilayer structure containing the resin with excellent gas barrier properties, and therefore exhibits excellent gas barrier properties against acidic gases such as hydrogen sulfide gas and carbon dioxide. Therefore, when it is used for transporting crude oil or natural gas from oil fields to store tanks, the crude oil or natural gas can be safely transported without leaking toxic hydrogen sulfide gas to the outside. In addition, the pipeline used in the method of transporting crude oil or natural gas in the present invention is made of a thermoplastic resin and can be joined by heating with a band heater during laying. Therefore, an open flame is avoided and the safety of laying operations is significantly improved.

### DETAILED EMBODIMENTS OF THE INVENTION

The method of transporting crude oil or natural gas of the present invention is a method of transporting crude oil or natural gas through a pipeline containing a multilayer structure having at least one barrier resin layer (A), and the barrier resin layer (A) comprises EVOH resin as a main component.

The barrier resin layer (A) used in the present invention comprises EVOH resin as a main component.

### (EVOH)

EVOH used in the present invention is a copolymer having ethylene units and vinyl alcohol units. EVOH is usually made by saponifying ethylene-vinyl ester copolymers. The preparation and saponification of ethylene-vinyl ester copolymers can be performed by a known method. Vinyl esters used in the preparation of ethylene-vinyl ester copolymers, may include fatty acid vinyl ester, such as vinyl formate, vinyl acetate, vinyl propionate, vinyl butyrate, vinyl valerate, vinyl decanoate, vinyl laurate, vinyl stearate, vinyl pivalate, and vinyl tertiary carbonate, among which vinyl acetate is preferred.

The ethylene unit content of EVOH is preferably 20 mol% or more, more preferably 25 mol% or more. When the ethylene unit content is less than 20 mol%, the thermal stability or the flexibility of EVOH will decrease, thus when the pipeline is deformed, the barrier properties against crude oil or natural gas may decrease. On the other hand, the ethylene unit content of EVOH is preferably 60 mol% or less, and more preferably 35 mol% or less. If the ethylene unit content of EVOH is greater than 60 mol%, the barrier properties against crude oil or natural gas may decrease.

The saponification degree of EVOH is preferably 90 mol% or more, more preferably 95 mol% or more, and even more preferably 99 mol% or more. If the saponification degree of EVOH is 90 mol% or more, the barrier properties of the obtained pipeline against crude oil or natural gas and the thermal stability of the pipeline during fused modeling will be further improved. The saponification degree of EVOH is usually 99.97 mol% or less, preferably 99.94 mol% or less. The ethylene unit content and the saponification degree of EVOH can be obtained by using a nuclear magnetic resonance (NMR) method.

In addition, EVOH may have units derived from monomers other than ethylene units, vinyl ester units, and saponified products thereof within a range that does not hinder the purpose of the present invention. The content of other monomer-derived units in EVOH is preferably 30 mol% or less, more preferably 20 mol% or less, still more preferably 10 mol% or less, and particularly preferably 5 mol% or less with respect to all monomer units in EVOH. When EVOH has other monomer-derived units, the content thereof is preferably 0.05 mol% or more, and more preferably 0.10 mol% or more with respect to all monomer units in EVOH. As other monomers, for example, the followings may be included: unsaturated acids such as acrylic acid, methyl acrylic acid, crotonic acid, itaconic acid, or anhydrides, salts, or mono- or dialkyl esters thereof; nitriles such as acrylonitrile and methyl acrylonitrile; amides such as acrylamide, methyl acrylamide; olefin sulfonic acids such as vinyl sulfonic acid, allyl sulfonic acid, methyl allyl sulfonic acid, or salts thereof; vinyl silane compounds such as vinyl trimethoxy silane, vinyl triethoxy silane, vinyl tris ( β-methoxy-ethoxy) silane and γ-methyl acryloxypropyl methoxy silane; alkyl vinyl ethers, vinyl ketones, N-ethylene pyrrolidone, vinyl chloride, vinylidene chloride, etc.

The MFR (melt flow rate) of EVOH (measured at 210 °C under a load of 2160 g) is preferably 0.1 to 100 g/10 minutes. If the MFR of EVOH is greater than 100 g/10 minutes, the strength of the barrier resin layer (A) may decrease. The MFR of EVOH is more preferably 50 g/10 minutes or less, and still more preferably 30 g/10 minutes or less. On the other hand, when the MFR of EVOH is less than 0.1 g/10 minutes, the fused modeling of the barrier resin layer (A) may become difficult. The MFR of EVOH is more preferably 0.5 g/10 minutes or more.

EVOH may be used alone in one kind, or may be used in a combination of two or more kinds different in the ethylene unit content, saponification degree or MFR.

The barrier resin layer (A) comprises EVOH resin as a main component. The content of the EVOH resin in the barrier resin layer (A) is preferably 50% or more by mass, more preferably 70% or more by mass, still more preferably 80% or more by mass, and particularly preferably 90% or more by mass. If the EVOH resin content is in the above range, high gas barrier properties against hydrocarbons, hydrogen sulfide gas, and carbon dioxide gas can be achieved.

### (Antioxidant)

From the viewpoint of ensuring sufficient mechanical strength when the pipeline of the present invention is used for a long period of time, the EVOH resin is a grade containing an antioxidant. The melting point of the antioxidant is 170 °C or lower. If the melting point of the antioxidant is greater than 170 °C, when the barrier resin is produced by melt mixing, the antioxidant will not be melted sufficiently, causing the antioxidant to be localized in the barrier resin ununiformly, leading to reduced oxidation resistance, thereby reducing the mechanical strength.

The molecular weight of the antioxidant is 300 or more. In the case where the molecular weight of the antioxidant is less than 300, the antioxidant on the surface of the resulting pipeline easily oozes, resulting in a decrease in the thermal stability of the barrier resin. The molecular weight of the antioxidant is preferably 400 or more, and more preferably 500 or more. On the other hand, from the viewpoint of improving dispersibility, the molecular weight of the antioxidant is 8000 or less, preferably 6000 or less, and more preferably 4000 or less.

As the antioxidant, a compound having hindered phenol groups is appropriately used. The compound having hindered phenol groups itself has excellent thermal stability, and has the ability to capture oxygen radicals that cause oxidative degradation, and when it is added to a barrier resin as an antioxidant, the effect of preventing oxidation degradation is obvious.

As the compound having hindered phenol groups, commercially available ones can be used, and the following products can be included.
(1) "IRGANOX 1010" manufactured by BASF Co., Ltd.: with a melting point of 110-125 °C, a molecular weight of 1178, pentaerythritol tetra[3-(3,5-di-tert-butyl-4-hydroxyphenyl) propionate];
(2) "IRGANOX 1076" manufactured by BASF Co., Ltd.: with a melting point of 50-55 °C, a molecular weight of 531, stearyl 3-(3,5-di-tert-butyl-4-hydroxyphenyl) propionate;
(3) "IRGANOX 1098" manufactured by BASF Co., Ltd.: with a melting point of 156-161 °C, a molecular weight of 637, N,N'-hexyl-1,6-diylbis[3-(3,5-di-tert-butyl-4-hydroxyl phenyl)propionamide];
(4) "IRGANOX 245" manufactured by BASF Co., Ltd.: with a melting point of 76-79 °C, a molecular weight of 587, triethylene glycol-bis[3-(3-tert-butyl-5-methyl-4-hydroxyphenyl)propionate];
(5) "IRGANOX 259" manufactured by BASF Co., Ltd.: with a melting point of 104-108 °C, a molecular weight of 639, 1,6-hexanediol-bis[3-(3,5-di-tert-butyl-4-hydroxyphenyl)propionate];
(6) "Sumilizer MDP-s" manufactured by Sumitomo Chemical Industry Co., Ltd.: with a melting point of about 128 °C, a molecular weight of 341, 2,2'-methylene-bis(4-methyl-6-tert-butylphenol);
(7) "Sumilizer GM" manufactured by Sumitomo Chemical Industry Co., Ltd.: with a melting point of about 128 °C, a molecular weight of 395, 2-tert-butyl-6-(3-tert-butyl-2-hydroxy-5-methylbenzyl)-4-methyl phenyl acrylate;
(8) "Sumilizer GA-80" manufactured by Sumitomo Chemical Industry Co., Ltd.: with a melting point of about 110 °C, a molecular weight of 741, 3,9-bis[2-{3-(3-tert-butyl-4-hydroxy-5-methyl phenyl)propionyloxy}-1,1-dimethylethyl]-2,4,8,10-tetraoxaspiro[5,5]undecane.

As the antioxidant, a compound having hindered amine groups is also preferably used. The compound having hindered amine groups can suppress the thermal degradation of the EVOH resin, and can trap the aldehyde generated by the thermal decomposition of the EVOH resin. As a result, the generation of decomposition gas is reduced, and therefore the generation of pores and bubbles in the barrier resin layer (A) during pipeline fused modeling is suppressed, and the resulting pipeline has excellent gas barrier properties.

As the compound having hindered amino groups, a piperidine derivative is preferred, and among them, a 2,2,6,6-tetraalkylpiperidine derivative having a substituent at the 4-position is more preferred. The substituent at the 4-position may include a carboxyl group, an alkoxy group, or an alkylamino group. In addition, the N-position of the hindered amino group of the compound having hindered amino groups may be replaced by an alkyl group.

As the compound having hindered amine groups, commercially available ones can be used, and the following products can be included.
(9) "TINUVIN 770" manufactured by BASF Co., Ltd.: with a melting point of 81-85 °C, a molecular weight of 481, bis(2,2,6,6-tetramethyl-4-piperidinyl) sebacate;
(10) "TINUVIN 765" manufactured by BASF Co., Ltd.: a liquid compound, with a molecular weight of 509, bis(1,2,2,6,6-pentamethyl-4-piperidinyl) sebacate and 1,2,2,6,6-pentamethyl-4-piperidinyl sebacate (mixture);
(11) "TINUVIN 622LD" manufactured by BASF Co., Ltd.: with a melting point of 55-70 °C, a molecular weight of 3100-4000, dimethyl succinate • 1-(2-hydroxyethyl)-4-hydroxy-2,2,6,6-tetramethylpiperidine polycondensate;
(12) "CHIMASSORB 119FL" manufactured by BASF Co., Ltd.: with a melting point of 130-140 °C, a molecular weight of above 2000, N,N'-bis(3-aminopropyl)ethylenediamine • 2,4-bis[N-butyl-N -(1,2,2,6,6-pentamethyl-4-piperidinyl)amino]-6-chloro-1 ,3,5-triazine condensate;
(13) "CHIMASSORB 944LD" manufactured by BASF Co., Ltd.: with a melting point of 100-135 °C, a molecular weight of 2000-3100, poly[[6-(1,1,3,3-tetramethylbutyl)amino-1,3,5-triazine-2,4-diyl)(2,2,6,6-tetramethyl-4-piperidinyl)imino)hexamethylene(2,2,6,6-tetramethyl-4-piperidinyl)imino]];
(14) "TINUVIN 144" manufactured by BASF Co., Ltd.: with a melting point of 146-150 °C, a molecular weight of 685, bis(1,2,2,6,6-pentamethyl-4-piperidinyl)[[3,5-bis(1,1-dimethylethyl)-4-hydroxyphenyl)methyl]butylmalonate;
(15) "UVINUL 4050H" manufactured by BASF Co., Ltd.: with a melting point of 157 °C, a molecular weight of 450, N,N'-1,6-dihexyl bis{N-(2,2,6,6-tetramethyl-4-piperidinyl)-formamide).

These compounds having hindered phenol groups or hindered amine groups may be used alone or in a combination of two or more kinds.

The content of the antioxidant in the barrier resin layer (A) is 0.01 to 5 parts by mass with respect to 100 parts by mass of the EVOH resin. If the content of the antioxidant is less than 0.01 parts by mass, the above-mentioned effects may not be achieved. The content of the antioxidant is preferably 0.05 part or more by mass, and more preferably 0.1 part or more by mass. On the other hand, if the content of the antioxidant is more than 5 parts by mass, poor dispersion of the antioxidant may occur. The content of the antioxidant is preferably 4 parts or less by mass, and more preferably 3 parts by mass with respect to 100 parts by mass of the EVOH resin.

### (Impact-resistant modifier)

From the viewpoint of preventing damage to the pipeline of the present invention due to external stress such as earthquake vibration, the EVOH resin preferably comprises an impact-resistant modified grade. As the impact-resistant modifier, for example, it may include acrylic elastomers; olefin elastomers such as ethylene-butene copolymers and ethylene-propylene copolymers; carbamate elastomers; styrene elastomers such as styrene-ethylene/butene-styrene block copolymer (SEBS), styrene-isobutylene-styrene block copolymer (SIBS), styrene-ethylene/propylene-styrene block copolymer (SEPS), styrene-butadiene-styrene block copolymer (SBS), styrene-isoprene-styrene block copolymer (SIS); conjugated diene elastomers such as styrene-butadiene copolymer, acrylonitrile-butadiene copolymer, acrylate-butadiene copolymers, and the hydrides thereof; silicone elastomers such as polysiloxanes; vinyl ionomer copolymers; polybutadiene, polyisoprene, butadiene-isoprene copolymer, polychloroprene, or multilayer structure polymer particles having the above-mentioned components in the innermost layer, etc. They can be used alone or in a combination of multiple kinds. Among them, the impact-resistant modifier is preferably at least one selected from acrylic elastomers, olefin elastomers, urethane elastomers, styrene elastomers and conjugated diene elastomers, and more preferably an acrylic elastomer.

As the impact-resistant modifier for acrylic elastomers, commercially available ones can be used, and the following products can be included.
(1) "Acrylic acid impact-resistant modifier PARALOID EXL2314" manufactured by Dow Chemical Co., Ltd.;
(2) "Acrylic acid impact-resistant modifier KANE ACE FM-21" manufactured by Kaneka Co., Ltd.;
(3) "Acrylic acid impact-resistant modifier KANE ACE FM-40" manufactured by Kaneka Co., Ltd.;
(4) "Acrylic acid impact-resistant modifier KANE ACE FM-50" manufactured by Kaneka Co., Ltd.;
(5) "Acrylic acid impact-resistant modifier KANE ACE M-570" manufactured by Kaneka Co., Ltd.;
(6) "Acrylic acid impact-resistant modifier KANE ACE M-210" manufactured by Kaneka Co., Ltd.

The content of the impact-resistant modifier in the barrier resin layer (A) is preferably 0.1 to 20 parts by mass with respect to 100 parts by mass of the EVOH resin. If the content of the impact-resistant modifier is less than 0.1 part by mass, the above effects may not be achieved. The content of the impact-resistant modifier is more preferably 0.5 part or more by mass, and even more preferably 1 part or more by mass. On the other hand, if the content of the impact-resistant modifier is more than 20 parts by mass, poor dispersion of the impact-resistant modifier sometimes occurs. The content of the impact-resistant modifier is more preferably 15 parts or less by mass, and still more preferably 12 parts or less by mass with respect to 100 parts by mass of EVOH.

The EVOH resin in the barrier resin layer (A) may also contain additives as long as it is in a range that does not hinder the effects of the present invention. Such additives may include resins other than EVOH resins, metal salts, acids, boron compounds, plasticizers, fillers, anti-blocking agents, lubricants, stabilizers, surfactants, colorants, ultraviolet absorbers, antistatic agents, desiccants, crosslinking agents, filling materials, reinforcing materials such as various fibers, etc. Among them, it preferably contains metal salts and acids from the viewpoint of the thermal stability of the barrier resin and the adhesion with other resins.

### (Metal salt)

From the viewpoint of maintaining the gas barrier properties of the pipeline of the present invention for a long period of time by improving the interlayer adhesion of the multilayer structure thereof, the EVOH resin preferably comprises a metal salt. As the metal salt, an alkali metal salt or an alkaline earth metal salt is preferred, and from the viewpoint of thermal stability, an alkaline earth metal salt is more preferred.

When the EVOH resin comprises a metal salt, its content is preferably 1 to 10000 ppm in terms of metal elements. The content of the metal salt is more preferably 5 ppm or more, still more preferably 10 ppm or more, and particularly preferably 20 ppm or more, in terms of metal elements. On the other hand, the content of the metal salt is more preferably 5000 ppm or less, still more preferably 1000 ppm or less, and particularly preferably 500 ppm or less, in terms of metal elements. The method for measuring the content of the metal salt may include a method of freezing and pulverizing dried EVOH resin pellets to obtain a sample, and quantifying the obtained sample with an ICP emission analyzer.

### (Acid)

From the viewpoint of improving the thermal stability of the EVOH resin when the pipeline of the present invention is melt-molded, the EVOH resin preferably comprises an acid. As the acid, it is preferably a carboxylic acid compound or a phosphoric acid compound.

When the EVOH resin comprises a carboxylic acid compound, its content is preferably 1 to 10000 ppm. The content of the carboxylic acid compound is more preferably 10 ppm or more, and still more preferably 50 ppm or more. On the other hand, the content of the carboxylic acid compound is more preferably 1000 ppm or less, and even more preferably 500 ppm or less. As a method for measuring the acid content, a neutralization titration method may be included.

When the EVOH resin comprises a phosphoric acid compound, its content is preferably 1 to 10000 ppm or more. The content of the phosphoric acid compound is more preferably 10 ppm or more, and still more preferably 30 ppm or more. On the other hand, the content of the phosphoric acid compound is more preferably 1000 ppm or less, and still more preferably 300 ppm or less. As the method for measuring the content of the phosphoric acid compound, it may include a method of freezing and pulverizing dried EVOH resin pellets to obtain a sample, and quantifying the obtained sample with an ICP emission analyzer.

When the EVOH resin comprises a boron compound, its content is preferably 1 to 2000 ppm. The content of the boron compound is more preferably 10 ppm or more, and still more preferably 50 ppm or more. On the other hand, the content of the boron compound is more preferably 1000 ppm or less, and still more preferably 500 ppm or less. If the content of the boron compound in the EVOH resin is within the above range, the thermal stability of the EVOH resin during the pipeline being melt-molded is further improved. The content of the boron compound can be measured by the same method as the above-mentioned method for a phosphoric acid compound.

As a method for obtaining the EVOH resin containing the above phosphoric acid compounds, carboxylic acid compounds or boron compounds, for example, a method of adding and milling these compounds to the EVOH resin when producing EVOH resin pellets or the like can be appropriately used. As the method of adding these compounds to the EVOH resin, it may include a method of adding dry powder, a method of adding a paste impregnated with a solvent, a method of adding a suspension suspended in a liquid, and a method of adding the solution dissolved in a solvent, or the method of immersing EVOH resin pellets in the solution. Among them, from the viewpoint of homogeneously dispersing the phosphoric acid compounds, carboxylic acid compounds, or boron compounds, a method of adding a solution dissolved in a solvent, or a method of immersing EVOH resin pellets in the solution is preferable. As the solvent, from the viewpoints of solubility of additives, costs, ease of handling, and safety of the working environment, for example, water is preferable.

As a method of mixing the aforementioned additives with the EVOH resin used in the barrier resin layer (A), a known method for mixing EVOH resin can be used. In the case of using the melt-milling method, after adding other resins, antioxidants, impact-resistant modifiers, etc. to EVOH, a screw-type extruder or the like can be used for melt-milling at 200 to 300 °C.

### (Adhesive resin layer (B))

The barrier resin layer (A) used in the present invention may be directly laminated with other layers such as a further thermoplastic resin layer (C), but it is preferably laminated via the adhesive resin layer (B) from the viewpoint of improving long-term durability.

As the resin used in the adhesive resin layer (B), for example, a polyolefin having a carboxyl group, a carboxylic anhydride group, or an epoxy group is preferably used. Among them, a polyolefin having a carboxyl group, a carboxylic anhydride group, or an epoxy group is more preferred from the viewpoint that both the adhesiveness to EVOH and the adhesiveness to polyethylene are excellent.

As the polyolefin having a carboxyl group, it includes polyolefin copolymers of acrylic acid and methacrylic acid, etc. As represented by ionic resins, all or part of the carboxyl groups contained in the polyolefin may be in a form of metal salt. As the polyolefin having a carboxylic anhydride group, it may include a polyolefin graft-modified with maleic anhydride and itaconic anhydride. In addition, as the polyolefin resin having an epoxy group, it includes glycidyl methacrylate copolymer polyolefin. Among these polyolefins having a carboxyl group, a carboxylic anhydride group, or an epoxy group, a polyolefin, particularly polyethylene obtained by modifying with a carboxylic anhydride such as maleic anhydride, is preferred from the viewpoint of excellent adhesion. It should be clearly stated that the resin used in the adhesive resin layer (B) is preferably a resin different from the resin used in the further thermoplastic resin layer (C) described later.

### (Further thermoplastic resin layer (C))

In addition to the barrier resin layer (A) and the adhesive resin layer (B), the pipeline used in the method of transporting crude oil and natural gas of the present invention preferably has a further thermoplastic resin layer (C). The resin used in the further thermoplastic resin layer (C) is preferably a polyolefin resin, which may include polyethylene such as low density polyethylene, linear low density polyethylene, medium density polyethylene, and high density polyethylene; ethylene copolymers obtained by copolymerizing ethylene with α-olefins such as propylene, 1-butene, 1-hexene, 4-methyl-1-pentene, etc. Polyethylene may be used as alone in one kind, or in a mixture of two or more kinds. Among them, the polyethylene used in the polyolefin layer is preferably high-density polyethylene.

The MFR (melt flow rate, measured at 190 °C under a load of 2.16 kg) of the polyethylene used in the further thermoplastic resin layer (C) is preferably 0.01 to 10 g/10 minutes. When the MFR of polyethylene is less than 0.01 g/10 minutes, fused modeling becomes difficult. On the other hand, when the MFR of polyethylene is greater than 10 g/10 minutes, the strength of the polyethylene layer will decrease and extrusion modeling will become difficult. The MFR of polyethylene is more preferably 5 g/10 minutes or less, still more preferably 3 g/10 minutes or less, and particularly preferably 2 g/10 minutes or less.

The further thermoplastic resin layer (C) preferably comprises a polyolefin resin as a main component. The content of the polyolefin resin in the further thermoplastic resin layer (C) is preferably 50% or more by mass, more preferably 70% or more by mass, even more preferably 80% or more by mass, and particularly preferably 90% or more by mass. If the content of the polyolefin resin is within the above range, the pipeline of the present invention will have excellent mechanical strength and can prevent damage due to external stress.

The further thermoplastic resin layer (C) may contain additives other than polyolefin, as long as it is in a range that does not hinder the effects of the present invention. The additives may include those described above as additives other than EVOH contained in the barrier resin layer (A). In particular, in the case where the further thermoplastic resin layer (C) is used for the innermost layer of the pipeline directly in contact with crude oil or natural gas, in order to prevent the occurrence of static electricity, it is preferable to add an antistatic agent.

As a raw material of the further thermoplastic resin layer (C), a recycled resin composition obtained by recycling a pipeline containing a resin-made multilayer structure can be used.

### (Pipeline)

The pipeline used in the method of transporting crude oil or natural gas of the present invention is a pipeline including a multilayer structure having at least one barrier resin layer (A) as disclosed above, and the layer structure of the multilayer structure may include the followings. In this illustration, the left is the inside, and the right is the outside.
Another thermoplastic resin layer (C)/adhesive resin layer (B)/barrier resin layer (A)/adhesive resin layer (B)/another thermoplastic resin layer (C);
Another thermoplastic resin layer (C)/barrier resin layer (A)/adhesive resin layer (B)/another thermoplastic resin layer (C);
Another thermoplastic resin layer (C)/adhesive resin layer (B)/barrier resin layer (A)/another thermoplastic resin layer (C).

The multilayer structure pipeline of the present invention does not contain steel pipelines, thus the corrosion of steel pipelines will not occur. In addition, in summary, the pipeline has an excellent barrier property against acidic gas and an excellent mechanical strength. The ratio of the thickness of the barrier resin layer (A) of the present invention to the entire thickness of the pipeline (barrier resin layer (A)/pipeline) is preferably 0.02 to 0.5. When the thickness ratio (barrier resin layer (A)/pipeline) is less than 0.02, the thickness unevenness of the barrier resin layer (A) becomes large, and the gas barrier properties against crude oil or natural gas will decrease. On the other hand, from the viewpoint of suppressing the decrease in barrier properties and reducing costs, the thickness ratio (barrier resin layer (A)/pipeline) is preferably 0.15 or less.

The overall thickness of the pipeline of the present invention is preferably 2 mm or more. When the overall thickness of the pipeline is less than 2 mm, the strength and gas barrier properties of the pipeline when transporting crude oil or natural gas will decrease. On the other hand, the overall thickness of the pipeline is preferably 100 mm or less, more preferably 10 mm or less. In the case that the overall thickness of the pipeline is greater than 100 mm, when the cross-sections of the pipeline are joined to each other through pipeline fittings for laying the pipeline, the way of heat transfer from the outside is insufficient, which may lead to the pipelines being not joined to each other, thereby causing defects.

The thickness of the barrier resin layer (A) in the pipeline of the present invention is preferably 0.10 mm or more, more preferably 0.20 mm or more, more preferably 0.30 mm or more, still more preferably 0.35 mm or more, and particularly preferably 0.40 mm or more. In addition, the thickness of the barrier resin layer (A) is preferably 1.00 mm or less. If the thickness is in the above range, the pipeline of the present invention has more excellent gas barrier properties against hydrogen sulfide gas contained in crude oil or natural gas.

As a method of manufacturing the pipeline of the present invention, a method of fused modeling the multilayer structure constituting the pipeline may be included. As the method of fused modeling the pipeline, the following methods can be used, for example, a method of co-extruding the resin constituting each layer through a circular mold; and a co-injection modeling method in which the resin constituting each layer is melted and continuously injected into a mold.

In the case of fused modeling the pipeline of the present invention, it is preferable to include, for example, the following step: cooling and solidifying the pipeline with cooling water at 10 to 70 °C immediately after the fused modeling. If the temperature of the cooling water is in the above range, the resulting pipeline does not have cracks, etc., and is excellent in gas barrier properties and mechanical strength. The temperature of the cooling water is more preferably 15 °C or higher, and even more preferably 20 °C or higher. The temperature of the cooling water is more preferably 60 °C or lower, and still more preferably 50 °C or lower.

The pipeline of the present invention is continuously manufactured by extrusion modeling as described above. Therefore, the barrier resin layer (A) forms a continuous surface throughout the pipeline, such that the barrier properties against acidic gases such as hydrogen sulfide gas and carbon dioxide are remarkably excellent.

The pipeline of the present invention can be subjected to secondary processing. As a secondary processing method, a known method can be used, and it may include a method of processing and modeling by heating a multilayer structure to 80-200 °C, deforming it into a desired shape, and modeling it for 1 minute to 2 hours.

As a laying method of the pipeline of the present invention, a method including joining a plurality of pipelines may be included. Specifically, it may include a method of joining the pipelines to each other by heating the surface of the pipeline fittings from the outside by a heater, under a state that the cross sections of a plurality of the pipelines suitable for the transport length are joined to each other through the pipeline fittings. As a method of heating the surface of the pipeline fittings from the outside by a heater, it may include a method of heating the pipeline fittings by a capacitor.

Compared with the welding of steel pipelines that may generate open flames, the present invention has superior safety in laying operations.

As for the pipeline of the present invention, reinforcing fiber materials, metal wires, etc. can be wound on the pipeline around the multilayer structure to reinforce the mechanical strength and the like.

### (Crude oil or natural gas)

The crude oil that can be transported through the pipeline of the present invention is a highly viscous liquid further containing acidic gases such as hydrogen sulfide gas in addition to a mixture of various hydrocarbons. The hydrocarbons contained in crude oil may include aromatic hydrocarbons such as benzene, ethylbenzene, toluene, xylene; saturated hydrocarbons such as n-hexane, n-octane, and isooctane; unsaturated hydrocarbons; and saturated cyclic hydrocarbons such as cyclopentane, and cyclohexane. In addition, crude oil comprises hydrogen sulfide gas. The concentration of hydrogen sulfide gas contained in crude oil varies depending on oil-producing places, and generally is 0.05% or more by mass. The natural gas that can be transported through the pipeline of the present invention is a gas containing saturated hydrocarbons and hydrogen sulfide, and is transported through the pipeline in a pressurized and liquefied state. The saturated hydrocarbons contained in natural gas may include methane, ethane, propane, butane, etc. In addition, natural gas also comprises hydrogen sulfide gas. The concentration of hydrogen sulfide gas contained in natural gas varies depending on gas fields, and may be 15% or more by mass in a gas field with a high concentration. The pipeline of the invention can transport crude oil or natural gas with a high concentration of hydrogen sulfide gas without leaking hydrogen sulfide gas.

### (Method of transporting crude oil or natural gas)

When the crude oil is transported through the pipeline of the present invention, an appropriate heater is installed on the pipeline to heat the crude oil to a temperature of 40 to 80 °C to lower the viscosity, thereby enabling efficient transportation. In addition, when transporting crude oil or natural gas from oil fields or gas fields, compressed liquid carbon dioxide is sometimes injected into the crude oil or natural gas for pressurized transportation. The pipeline of the invention can transport crude oil or natural gas without leaking carbon dioxide.

### EXAMPLE

Hereinafter, the present invention will be further specified with Examples.

### (1) Barrier property against crude oil

The pipelines obtained in each of the Examples and Comparative Examples were cut to a length of 100 mm, and one end was sealed with an aluminum tape ("ALUMINUM SEAL" (Crude Oil Permeability: 0 g/m² • day) manufactured by FP Chemical Co., Ltd.), and the tape end was fixed with a metal band. The pipeline was filled with 500 g of BTEX (25% by volume of benzene, 25% by volume of toluene, 25% by volume of ethylbenzene, 25% by volume of xylene) as a model compound for crude oil, and then the other end was sealed with an aluminum tape, and the tape end was fixed with a metal band. Similarly, another two pipelines sealed with the model compound were manufactured, and placed in an explosion-proof constant temperature and humidity tank (40 °C, 0% RH condition or 85 °C, 0% RH condition) respectively, and the quality of the pipelines was measured every other day, for 10 days. The maximum value of the average quality change per day was evaluated as the barrier property of the pipeline against crude oil.

### (2) Barrier property against hydrogen sulfide gas

The pipelines obtained in each of the Examples and Comparative Examples were cut to a length of 100 mm, and one end was sealed with an aluminum tape ("ALUMINUM SEAL" manufactured by FP Chemical Co., Ltd.), and the tape end was fixed with a metal band. After the pipeline was filled with 500 g of BTEX solution in which 0.1% by mass of hydrogen sulfide gas was dissolved by bubbling, the other end was sealed with an aluminum tape under a nitrogen atmosphere, and the tape end was fixed with a metal band. Further, the pipeline was placed in an aluminum soft package and sealed with 2 L of nitrogen gas at 23 °C, and the mouth of the soft package was sealed with an aluminum tape. The soft package was placed in an explosion-proof constant temperature and humidity tank (40 °C, 0%RH condition or 85 °C, 0%RH condition) for 10 days. After returning to 23 °C, the hydrogen sulfide gas concentration in the soft package was measured by a hydrogen sulfide detector tube ("Hydrogen Sulfide 4LB" manufactured by GASTEC Co., Ltd. (Detection tube for short time, measuring range: 0.5-12 ppm) or "Hydrogen Sulfide 4L" manufactured by GASTEC Co., Ltd. (Detection tube for short time, measuring range: 1-240 ppm)), to evaluate the barrier property of the resin pipeline against hydrogen sulfide gas.

### (3) Barrier property against carbon dioxide

The pipelines obtained in each of the Examples and Comparative Examples were cut to a length of 100 mm, and one end was sealed with an aluminum tape ("ALUMINUM SEAL" manufactured by FP Chemical Co., Ltd.), and the tape end was fixed with a metal band. After the pipeline was filled with 500 g of BTEX solution in which 0.1% by mass of carbon dioxide was dissolved by bubbling, the other end was sealed with an aluminum tape under a nitrogen atmosphere, and the tape end was fixed with a metal band. Further, the pipeline was placed in an aluminum soft package and sealed with 2 L of nitrogen gas at 23 °C, and the mouth of the soft package was sealed with an aluminum tape. The soft package was placed in an explosion-proof constant temperature and humidity tank (40 °C, 0%RH condition or 85 °C, 0%RH condition) for 10 days. After returning to 23 °C, 1.5cc of gas inside the soft package was drawn with an airtight syringe, and measured by GC-MS ("7890B GC"), detector ("5977B MSD"), and column ("DB-624" (column length: 60 m, column diameter: 0.25 mm)) manufactured by Agilent Technologies Co., Ltd.) at 40 °C for 15 minutes, thereby to measure the gas inside the soft package, and analyze the carbon dioxide concentration inside the soft package according to the standard curve manufactured separately, so as to evaluate the barrier property of the pipeline against carbon dioxide.

### (4) Acid resistance

The pipelines obtained in each of the Examples and Comparative Examples were cut to a length of 100 mm, and immersed in a 10% by mass aqueous sulfuric acid solution or a 10% by mass aqueous sodium hydroxide solution at 40 °C for 7 days, respectively, then the surface was washed with pure water, and vacuum dried for 12 hours. The dried pipeline was used to evaluate the acid resistance of the pipeline by the same evaluation method as the above (1) Barrier property against crude oil.

### (5) Gas barrier property during crude oil transportation

Two crude oil tanks (a pressure vessel made of SUS316, with a volume of 1000 L) were connected with each other by using the pipelines with a length of 5 m obtained in each of the Examples and Comparative Examples and two valves. Furthermore, the pipeline was enclosed around and sealed with a pipeline made of SUS316 with a diameter of 20 cm and a thickness of 5 mm with a silicon diaphragm cap. After one crude oil tank was filled with 500 L of BTEX solution in which 0.1% by mass of hydrogen sulfide gas was dissolved by bubbling at 23 °C, the pressure of the crude oil tank was increased to 0.1 MPa gauge pressure with carbon dioxide, and the valve for connecting the pipelines was opened, so that all the solution was pressurized and transported to the other tank. After pressurized transportation, the two crude oil tanks were emptied and decompressed, and the solution was pressurized and transported again to one crude oil tank through the same process. This operation was repeated 100 times. A hydrogen sulfide detector was used to suck and detect the gas between the pipelines obtained in each of the Examples and Comparative Examples and the pipelines made of SUS316 from the position of the diaphragm cap. Based on the detected hydrogen sulfide concentration, the gas barrier property during crude oil transportation was evaluated according to the following criteria.
A: The concentration of hydrogen sulfide is less than 0.1 ppm
B: The concentration of hydrogen sulfide is 0.1 ppm or more.

### Reference Example 1

The pellets of high-density polyethylene resin ("HI-ZEX 5000H" manufactured by Prime Polymer Co., Ltd.) with an MFR (measured at 190 °C under a load of 2.16 kg) of 0.1 g/10 minutes were fed into the first extruder, the pellets of maleic anhydride-modified polyethylene resin ("ADMER NF500" manufactured by Mitsui Chemicals Co., Ltd.) were fed into the second extruder, and the pellets of EVOH resin ("EVAL F101B" manufactured by KURARAY Co., Ltd.) with an MFR (measured at 210 °C under a load of 2.16 kg) of 3 g/10 minutes and an ethylene unit content of 32 mol% were fed into the third extruder. Three types of 5-layer circular molds having the first/second/third/second/first structure in order from the outer layer side were used, to extrude a pipeline with an outer diameter of 100 mm and a thickness of 5 mm, which was then immediately passed into a cooling water tank adjusted to 5 °C to cool and solidify, and cut to a length of 5 m. The layer composition of the obtained pipeline was, in order from the outer layer side, high-density polyethylene resin layer (further thermoplastic resin layer (C))/ maleic anhydride-modified polyethylene resin layer (adhesive resin layer (B))/ EVOH resin layer (barrier resin layer (A))/maleic anhydride-modified polyethylene resin layer (adhesive resin layer (B))/ high density polyethylene resin layer (further thermoplastic resin layer (C))= 2000µm/250µm/500µm/250µm/2000µm. The various evaluation results of the obtained pipelines were shown in Table 1.

### Example 2

99.5 Parts by mass of EVOH resin ("EVAL F101B" manufactured by KURARAY Co., Ltd.) with an MFR (measured at 210 °C under a load of 2.16 kg) of 3 g/10 minutes and an ethylene unit content of 32 mol%, and 0.5 part by mass of N,N'-hexyl-1,6-diylbis[3-(3,5-di-tert-butyl-4-hydroxyphenyl)propionamide] ("IRGANOX 1098" manufactured by BASF Co., Ltd.) as an antioxidant were dry blended, then fused and milled at a barrel temperature of 230 °C and a screw speed of 50 revolutions per minute by using a twin-screw milling extruder (screw diameter of 25 mmφ, L/D=30, manufactured by Toyo Seiki Seisakusho Co., Ltd.). After that, the fused milled product was extruded as a strand shape from the mold into a cooling water tank at 5 °C, and pelletized with a skewer cutting machine to obtain barrier resin pellets. A pipeline was manufactured in the same manner as in Reference Example 1 except that the obtained barrier resin pellets were put into the third extruder. Various evaluation results were shown in Table 1.

### Example 3

89.5 Parts by mass of EVOH resin ("EVAL F101B" manufactured by KURARAY Co., Ltd.) with an MFR (measured at 210 °C under a load of 2.16 kg) of 3 g/10 minutes and an ethylene content of 32 mol%, an impact-resistant modifier containing an acrylic elastomer ("PARALOID EXL2314" manufactured by Dow Chemical Co., Ltd.), and 0.5 part by mass of N,N'-hexyl-1,6-diylbis[3-(3,5-di-tert-butyl-4-hydroxyphenyl)propionamide] ("IRGANOX 1098" manufactured by BASF) as an antioxidant were dry blended, then fused and milled at a barrel temperature of 230 °C and a screw speed of 50 revolutions per minute by using a twin-screw milling extruder (screw diameter of 25 mmφ, L/D=30, manufactured by Toyo Seiki Seisakusho Co., Ltd.). After that, the fused milled product was extruded as a strand shape from the mold into a cooling water tank at 5 °C, and pelletized with a skewer cutting machine to obtain barrier resin pellets. A pipeline was manufactured in the same manner as in Reference Example 1 except that the obtained barrier resin pellets were put into the third extruder. Various evaluation results were shown in Table 1.

### Comparative example 1

A single layer pipeline containing the high-density polyethylene resin was manufactured in the same manner as in Reference Example 1, except that the thickness of the layer containing the high-density polyethylene resin extruded from the first extruder was set to 5000 µm, and no resin was put into the second and third extruders. Various evaluation results were shown in Table 1.

**Table 1**

| | Pipeline | | | | | | | | | Barrier property against crude oil | | Barrier property against hydrogen sulfide gas | | Barrier property against carbon dioxide | | Acid resistance | | Gas barrier property during crude oil transportation |
|---|---|---|---|---|---|---|---|---|---|---|---|---|---|---|---|---|---|---|
| | Barrier resin layer (A) | | | | | | Adhesive resin layer (B) | Another thermop lastic resin layer (C) | Layer composition of the multilayer structure thickness of each layer (µm) | (g/day • atm) | | Hydrogen sulfide concentration inside the soft package (ppm) | | Carbon dioxide concentratio n inside the soft package (ppm) | | (g/day) | | Evaluation of hydrogen sulfide concentration |
| | Barrier resin | | Antioxidant | | Impact-resistant modifier | | Kinds | Kinds | | 40°C, 0% RH | 85°C, 0% RH | 40°C, 0% RH | 85°C, 0% RH | 40°C 0% RH | 85°C 0% RH | 40°C, 0% RH | 85°C, 0% RH | |
| | Ethylene amount (mol %) | Content (% *by* mass) | Kinds | Content (% *by* mass) | Kinds | content (% by mass) | | | | | | | | | | | | |
| Ref. Ex. 1 | 32 | 100 | - | - | - | - | ADMER*³ | HDPE*⁴ | C/B/A/B/C 2000/250/500/250/200 0 | <0.01 | <0.01 | 0.5 | 4.3 | 0.04 | 1.9 | <0.01 | < 0.01 | A |
| Ex. 2 | 32 | 99.5 | IRGANOX | 0.5 | - | - | ADMER*³ | HDPE*⁴ | C/B/A/B/C 2000/250/500/250/200 0 | <0.01 | <0.01 | 0.6 | 4.5 | 0.05 | 2.0 | <0.01 | < 0.01 | A |
| Ex. 3 | 32 | 89.5 | IRGANOX 1098*¹ | 0.5 | PARALOID *² | 10 | ADMER*³ | HDPE*⁴ | C/B/A/B/C 2000/250/500/250/200 0 | <0.01 | <0.01 | 0.8 | 5.1 | 0.06 | 2.4 | <0.01 | < 0.01 | A |
| Co Ex. 1 | - | - | - | - | - | - | - | HDPE*⁴ | C 5000 | 0.4 | 31 | 205 | - | 20 | - | 0.4 | 33 | B |

| | | | | | | | | | | | | | | | | | | |
|---|---|---|---|---|---|---|---|---|---|---|---|---|---|---|---|---|---|---|
| *1 IRGANOX 1098 (manufactured by BASF Co., Ltd.) *2 PARALOID EXL2314 (manufactured by Dow Chemical Co., Ltd.) *3 ADMER NF500 (manufactured by Mitsui Chemicals Co., Ltd.) *4 HI-ZEX 5000H (manufactured by Prime Polymer Co., Ltd.) | | | | | | | | | | | | | | | | | | |

## Claims

1. A transportation method, which is a method for transporting crude oil or natural gas through a pipeline comprising a multilayer structure having at least one barrier resin layer (A), wherein the barrier resin layer (A) comprises an ethylene-vinyl alcohol copolymer resin as a main component, the barrier resin layer (A) further comprises an antioxidant, a melting point of the antioxidant is 170 °C or lower, a molecular weight of the antioxidant is 300 or more and 8,000 or less, and the content of the antioxidant in the barrier resin layer (A) is 0.01 to 5 parts by mass with respect to 100 parts by mass of the ethylene-vinyl alcohol copolymer resin.

2. The transportation method according to claim 1, wherein, the crude oil or natural gas comprises acidic gas.

3. The transportation method according to claim 1 or 2, wherein, the acidic gas is hydrogen sulfide.

4. The transportation method according to any one of claims 1 to 3, wherein, the amount of hydrogen sulfide is 0.05% or more by mass with respect to the total amount of the crude oil or natural gas.

5. The transportation method according to any one of claims 1 to 4, wherein, the barrier resin layer (A) is continuous.

6. The transportation method according to any one of claims 1 to 5, wherein, the ethylene unit content of the ethylene-vinyl alcohol copolymer is 20 to 60 mol%.

7. The transportation method according to any one of claims 1 to 6, wherein, there is a further thermoplastic resin layer (C) on both sides of the barrier resin layer (A) via an adhesive resin layer (B).

8. The transportation method according to claim 7, wherein, the further thermoplastic resin layer (C) comprises a polyethylene resin as a main component.

9. The transportation method according to any one of claims 1 to 8, wherein, the total thickness of the pipeline is 2 mm to 100 mm, and the thickness of the barrier resin layer (A) is 0.20 mm to 1.00 mm.

10. A pipeline with a multilayer structure having at least one barrier resin layer (A), wherein the barrier resin layer (A) comprises an ethylene-vinyl alcohol copolymer resin as a main component, the barrier resin layer (A) further comprises an antioxidant, a melting point of the antioxidant is 170 °C or lower, a molecular weight of the antioxidant is 300 or more and 8,000 or less, and the content of the antioxidant in the barrier resin layer (A) is 0.01 to 5 parts by mass with respect to 100 parts by mass of the ethylene-vinyl alcohol copolymer resin for the transportation method according to any one of claims 1 to 9.

11. A laying method for pipelines according to claim 10 comprising the following steps:
providing a plurality of pipelines according to claim 10, connecting the cross sections of the pipelines to each other through pipeline fittings, and heating the surface of the pipeline fittings from outside with a capacitor heater to join the pipelines with each other.

## Patentansprüche

1. Transportverfahren, das ein Verfahren zum Transport von Rohöl oder Erdgas durch eine Rohrleitung ist, die eine mehrschichtige Struktur mit mindestens einer Barriereharzschicht (A) umfasst, wobei die Barriereharzschicht (A) ein Ethylen-Vinylalkohol-Copolymerharz als einen Hauptbestandteil umfasst, wobei die Barriereharzschicht (A) weiter ein Antioxidans umfasst, ein Schmelzpunkt des Antioxidans 170 °C oder weniger beträgt, ein Molekulargewicht des Antioxidans 300 oder mehr und 8.000 oder weniger beträgt, und der Gehalt des Antioxidans in der Barriereharzschicht (A) 0,01 bis 5 Masseteile, bezogen auf 100 Masseteile des Ethylen-Vinylalkohol-Copolymerharzes, beträgt.

2. Transportverfahren nach Anspruch 1, wobei das Rohöl oder Erdgas saures Gas umfasst.

3. Transportverfahren nach Anspruch 1 oder 2, wobei das saure Gas Schwefelwasserstoff ist.

4. Transportverfahren nach einem der Ansprüche 1 bis 3, wobei der Gehalt an Schwefelwasserstoff 0,05 Massenprozent oder mehr, bezogen auf die Gesamtmenge des Rohöls oder Erdgases, beträgt.

5. Transportverfahren nach einem der Ansprüche 1 bis 4, wobei die Barriereharzschicht (A) fortlaufend ist.

6. Transportverfahren nach einem der Ansprüche 1 bis 5, wobei der Ethyleneinheitgehalt des Ethylen-Vinylalkohol-Copolymers 20 bis 60 mol% beträgt.

7. Transportverfahren nach einem der Ansprüche 1 bis 6, wobei sich auf beiden Seiten der Barriereharzschicht (A) über eine Haftmittelharzschicht (B) eine weitere thermoplastische Harzschicht (C) befindet.

8. Transportverfahren nach Anspruch 7, wobei die weitere thermoplastische Harzschicht (C) ein Polyethylenharz als einen Hauptbestandteil umfasst.

9. Transportverfahren nach einem der Ansprüche 1 bis 8, wobei die Gesamtdicke der Rohrleitung 2 mm bis 100 mm beträgt und die Dicke der Barriereharzschicht (A) 0,20 mm bis 1,00 mm beträgt.

10. Rohrleitung mit einem mehrschichtigen Aufbau, die mindestens eine Barriereharzschicht (A) aufweist, wobei die Barriereharzschicht (A) ein Ethylen-Vinylalkohol-Copolymerharz als einen Hauptbestandteil umfasst, die Barriereharzschicht (A) weiter ein Antioxidans umfasst, ein Schmelzpunkt des Antioxidans 170 °C oder weniger beträgt, ein Molekulargewicht des Antioxidans 300 oder mehr und 8.000 oder weniger beträgt, und der Gehalt des Antioxidans in der Barriereharzschicht (A) 0,01 bis 5 Masseteile, bezogen auf 100 Masseteile des Ethylen-Vinylalkohol-Copolymerharzes, beträgt, für das Transportverfahren nach einem der Ansprüche 1 bis 9.

11. Verlegungsverfahren für Rohrleitungen nach Anspruch 10, umfassend die folgenden Schritte: das Bereitstellen einer Mehrzahl von Rohrleitungen nach Anspruch 10, das Verbinden der Querschnitte der Rohrleitungen miteinander mittels Rohrverbindungsstücken und das Erwärmen der Oberfläche der Rohrverbindungsstücke von außen mit einem Kondensatorheizer, um die Rohrleitungen miteinander zu verbinden.

## Revendications

1. Procédé de transport, qui est un procédé de transport de pétrole brut ou de gaz naturel à travers un pipeline comprenant une structure multicouche ayant au moins une couche de résine barrière (A), dans lequel la couche de résine barrière (A) comprend une résine de copolymère d'éthylène-alcool de vinyle en tant que composant principal, la couche de résine barrière (A) comprend en outre un antioxydant, un point de fusion de l'antioxydant est de 170 °C ou inférieur, un poids moléculaire de l'antioxydant est de 300 ou plus et 8000 ou moins, et la teneur en l'antioxydant dans la couche de résine barrière (A) est de 0,01 à 5 parties en masse par rapport à 100 parties en masse de la résine de copolymère d'éthylène-alcool de vinyle.

2. Procédé de transport selon la revendication 1, dans lequel le pétrole brut ou le gaz naturel comprend du gaz acide.

3. Procédé de transport selon la revendication 1 ou 2, dans lequel le gaz acide est le sulfure d'hydrogène.

4. Procédé de transport selon l'une quelconque des revendications 1 à 3, dans lequel la quantité de sulfure d'hydrogène est de 0,05 % en masse ou plus par rapport à la quantité totale du pétrole brut ou du gaz naturel.

5. Procédé de transport selon l'une quelconque des revendications 1 à 4, dans lequel la couche de résine barrière (A) est continue.

6. Procédé de transport selon l'une quelconque des revendications 1 à 5, dans lequel la teneur en unité d'éthylène du copolymère d'éthylène-alcool de vinyle est de 20 à 60 % en mol.

7. Procédé de transport selon l'une quelconque des revendications 1 à 6, dans lequel il y a une couche de résine thermoplastique supplémentaire (C) des deux côtés de la couche de résine barrière (A) par le biais d'une couche de résine adhésive (B).

8. Procédé de transport selon la revendication 7, dans lequel la couche de résine thermoplastique supplémentaire (C) comprend une résine de polyéthylène en tant que composant principal.

9. Procédé de transport selon l'une quelconque des revendications 1 à 8, dans lequel l'épaisseur totale du pipeline est de 2 mm à 100 mm, et l'épaisseur de la couche de résine barrière (A) est de 0,20 mm à 1,00 mm.

10. Pipeline avec une structure multicouche ayant au moins une couche de résine barrière (A), dans lequel la couche de résine barrière (A) comprend une résine de copolymère d'éthylène-alcool de vinyle en tant que composant principal, la couche de résine barrière (A) comprend en outre un antioxydant, un point de fusion de l'antioxydant est de 170 °C ou inférieur, un poids moléculaire de l'antioxydant est de 300 ou plus et 8000 ou moins, et la teneur en l'antioxydant dans la couche de résine barrière (A) est de 0,01 à 5 parties en masse par rapport à 100 parties en masse de la résine de copolymère d'éthylène-alcool de vinyle pour le procédé de transport selon l'une quelconque des revendications 1 à 9.

11. Procédé de pose pour des pipelines selon la revendication 10 comprenant les étapes suivantes :
fournir une pluralité de pipelines selon la revendication 10, connecter les sections transversales des pipelines l'une à l'autre par des raccords de pipeline, et chauffer la surface des raccords de pipeline de l'extérieur avec un élément chauffant à condensateur pour relier les pipelines l'un à l'autre.
